# EUROPEAN PATENT SPECIFICATION

(11) **EP 2 502 815 B1**
(45) Date of publication and mention of the grant of the patent: **14.05.2014**
(21) Application number: 12157607.8
(22) Date of filing: 01.03.2012
(51) Int. Cl.: B62K 11/02

(54) **Motorcycle**
Motorrad
Motocyclette

(30) Priority: 23.03.2011 JP 2011063755
(43) Date of publication of application: 26.09.2012
(73) Proprietor: Yamaha Hatsudoki Kabushiki Kaisha, Iwata-shi Shizuoka 438-8501 (JP)
(72) Inventor: Yamamoto, Kouji, Shizuoka 438-8501 (JP)
(74) Representative: Grünecker, Kinkeldey, Stockmair & Schwanhäusser

(56) References cited:
- EP-A1- 2 347 950
- JP-A- 2002 046 683
- US-A- 2 551 982

## Description

The present invention relates to a motorcycle. A motorcycle according to the preamble of claim 1 is known from US 2 551 982 A.

In some motorcycles, a footboard is disposed forwards of a seat for allowing a rider to put his/her feet thereon. For example, Japan Laid-open Patent Application Publication No. JP-A-2006-298356 describes a scooter-type motorcycle including a flat footboard having a flat shape in a transverse (width) direction of the vehicle. The motorcycle further includes a vehicle body frame. The vehicle body frame includes a head pipe, a pair of right and left down frame portions, a pair of right and left lower frame portions, a pair of right and left upright frame portions, a pair of right and left seat rail portions, a coupling frame and a center frame. The down frame portions are downwardly extended from the head pipe. The lower frame portions are backwardly extended from the bottom parts of the down frame portions while being disposed under the flat footboard. The upright frame portions are upwardly extended from the rear parts of the lower frame portions. The seat rail portions are backwardly extended from the top parts of the upright frame portions while being disposed under the seat. The front portion of the coupling frame is coupled to the bottom parts of the right and left down frame portions. Further, the rear portion of the coupling frame is coupled to the bottom parts of the right and left upright frame portions. The center frame is disposed for connecting the head pipe and the coupling frame.

The vehicle body frame of the motorcycle of EP 2 347 950 A (date of publication: 27.07.2011) includes a first cross frame portion connecting a right down frame portion and a left down frame portion while passing through either the front or rear of a head pipe portion in a view of an extending direction of a center axis of the head pipe portion. The first cross frame portion is connected to the head pipe portion. To enhance stiffness of the vehicle body frame, a first frame portion connects the connection between the right down frame portion and a right bottom frame portion and the connection between the left down frame portion and a left bottom frame portion, and two further frame portions connect the first frame portion with the longitudinal center portions of the left and right bottom frame portions.

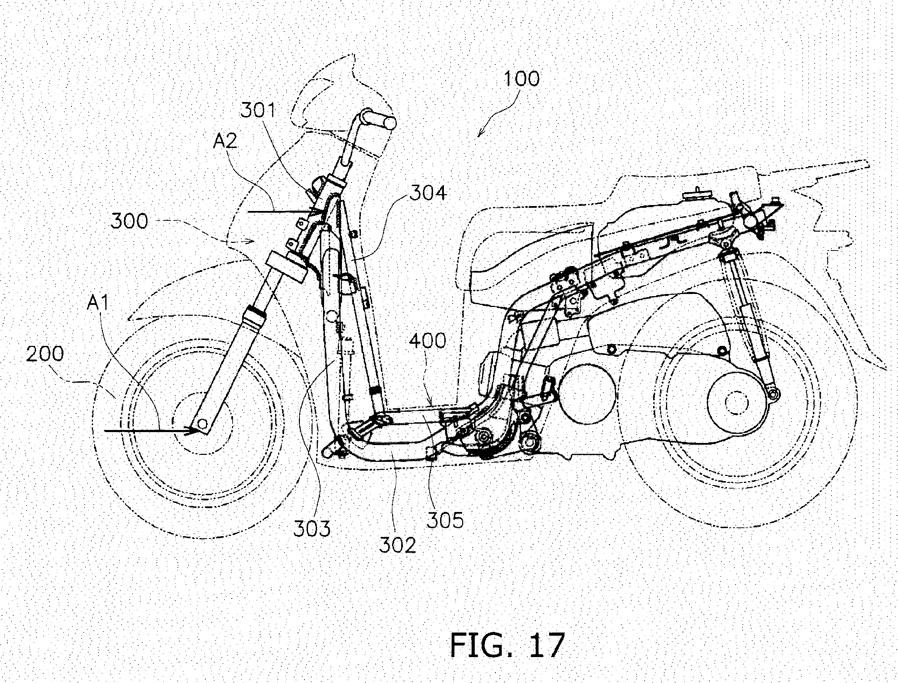

In the motorcycles including the flat footboard as described above, it is required to position the lower frames as low as possible under the flat footboard in order to dispose the flat footboard in a lower position. In a motorcycle 100 illustrated in FIG. 17, however, a load A2, which is backwardly applied to a head pipe 301 of a vehicle body frame 300, is produced by a load A1 applied to a front wheel 200 from ahead of the vehicle body. As described above, lower frame portions 302 are positioned as low as possible in the motorcycle 100 including a flat footboard 400. Therefore, the load A2 results in a large moment in a portion between the lower frame portions 302 and the down frame portions 303. In view of the above, the motorcycle 100 is provided with a center frame 304 and a coupling frame 305 in order to support the load A2 applied to the vehicle body frame 300. Thus, required stiffness can be reliably obtained for the vehicle body frame 300.

Meanwhile, extension of the longitudinal (back-and-forth) length of the flat footboard has been demanded for enhancing comfortableness of a rider. Especially, longitudinal length extension has been demanded for the transversely middle portion of the flat footboard. In the well-known motorcycles as described above, however, it is not easy to extend the longitudinal length of the transversely middle portion of the flat footboard due to the center frame existing as an essential component for reliably obtaining stiffness required for the vehicle body frame.

It is an object of the present invention to provide a motorcycle for reliably obtaining stiffness required for a vehicle body frame, and simultaneously, for extending the longitudinal length of a footboard. Such an object is achieved by a motorcycle according to claim 1.

A motorcycle according to a first aspect of the present invention includes a vehicle body frame, a steering shaft, a front fork, a front wheel, a seat and a footboard. The vehicle body frame includes a head pipe portion, a left down frame portion, a right down frame portion, a left reinforcement frame portion, a right reinforcement frame portion, a left under frame portion and a right under frame portion. The head pipe portion is positioned in a vehicle body center in a vehicle transverse direction. The left down frame portion is downwardly extended laterally away from the head pipe portion to the left and connected to a left lateral portion of the head pipe portion. The right down frame portion is downwardly extended laterally away from the head pipe portion to the right and connected to a right lateral portion of the head pipe portion. The left reinforcement frame portion is connected to the left down frame portion and is bent rearwards. Further, the left reinforcement frame portion has stiffness higher than that of the left down frame portion. The right reinforcement frame portion is connected to the right down frame portion and is bent rearwards. Further, the right reinforcement frame portion has stiffness higher than that of the right down frame portion. The left under frame portion is connected to the left reinforcement frame portion and is extended rearwards. The right under frame portion is connected to the right reinforcement frame portion and is extended rearwards. The steering shaft is inserted into the head pipe portion. The front fork is connected to a bottom portion of the steering shaft. The front wheel is supported by a bottom portion of the front fork. The seat is positioned rearwards of the head pipe portion while being supported by the vehicle body frame. The footboard is positioned between the front wheel and the seat in a vehicle longitudinal direction. The footboard is positioned lower than the seat, while being positioned higher than the right under frame portion and the left under frame portion, and is preferably flat. Accordingly, the vehicle body frame preferably does not include a frame, which is extended from the head pipe portion to a position lower than the footboard while being disposed between the right down frame portion and the left down frame portion in the vehicle transverse direction.

A motorcycle according to a second aspect of the present invention relates to the motorcycle according to the first aspect of the present invention. In the motorcycle, each of the right reinforcement frame portion and the left reinforcement frame portion includes a pipe-shaped member and a plate-shaped member. The plate-shaped member is disposed for intersecting with the pipe-shaped member across a diameter of the pipe-shaped member.

A motorcycle according to a third aspect of the present invention relates to the motorcycle according to the second aspect of the present invention. In the motorcycle, the plate-shaped member has a smaller area in a plan view of the vehicle than in a side view of the vehicle.

A motorcycle according to a fourth aspect of the present invention relates to the motorcycle according to the first aspect of the present invention. In the motorcycle, an upper portion of the left down frame portion and an upper portion of the left reinforcement frame portion are at least partially overlapped in the vehicle longitudinal direction in a side view of the vehicle. Further, an upper portion of the right down frame portion and an upper portion of the right reinforcement frame portion are at least partially overlapped in the vehicle longitudinal direction in a side view of the vehicle.

Amotorcycle according to a fifth aspect of the present invention relates to the motorcycle according to the first aspect of the present invention. The motorcycle further includes a battery. The battery is disposed between the right down frame portion and the left down frame portion in the vehicle transverse direction. Preferably, the right down frame portion and the left down frame portion are at least partially overlapped with the battery in a side view of the vehicle.

A motorcycle according to a sixth aspect of the present invention relates to the motorcycle according to the fifth aspect of the present invention. In the motorcycle, each of the right down frame portion and the left down frame portion includes a portion horizontally extended laterally outwards from the head pipe portion.

A motorcycle according to a seventh aspect of the present invention relates to the motorcycle according to the first aspect of the present invention. In the motorcycle, a front edge of the flat footboard is forwardly recessed in a middle portion thereof in the vehicle transverse direction.

A motorcycle according to an eighth aspect of the present invention relates to the motorcycle according to the first aspect of the present invention. In the motorcycle, the flat footboard has a front edge linearly extended in the transverse direction.

A motorcycle according to a ninth aspect of the present invention relates to the motorcycle according to the first aspect of the present invention. In the motorcycle, a center of a front edge of the flat footboard in the vehicle transverse direction is overlapped with the right reinforcement frame portion and the left reinforcement frame portion in a side view of the vehicle.

A motorcycle according to a tenth aspect of the present invention relates to the motorcycle according to the first aspect of the present invention. In the motorcycle, the front fork includes a suspension device. The suspension device supports the front wheel. The front wheel is configured to be overlapped with the right down frame portion and the left down frame portion in a side view of the vehicle at least when the suspension device is maximally contracted.

According to the motorcycle of the first aspect of the present invention, the vehicle body frame does not include a frame, which is extended from the head pipe portion to a position downward of the flat footboard while being disposed between the right and left down frame portions in the vehicle transverse direction. In short, the vehicle body frame does not include a center frame provided in the well-known motorcycles. Therefore, the flat footboard can be extended in the vehicle longitudinal direction. Further, the right reinforcement frame portion is disposed between the right down frame portion and the right under frame portion, while the left reinforcement frame portion is disposed between the left down frame portion and the left under frame portion. Therefore, each reinforcement frame portion can receive and support load acting on a portion between each down frame portion and each under frame portion. With the structure, the vehicle body frame can reliably obtain required stiffness even without being provided with a center frame provided in the well-known motorcycles. According to the motorcycle of the first aspect of the present invention, it is thus possible to reliably obtain stiffness required for the vehicle body frame, and simultaneously, extend the flat footboard in the vehicle longitudinal direction.

According to the motorcycle of the second aspect of the present invention, each of the right and left reinforcement frame portions can obtain higher stiffness due to the plate-shaped member provided therein.

According to the motorcycle of the third aspect of the present invention, each of the right and left reinforcement frame portions can obtain higher stiffness against a direction of bending each reinforcement frame portion when load is applied to the front wheel from ahead of the vehicle.

According to the motorcycle of the fourth aspect of the present invention, the down frame portions are extended in a direction roughly perpendicular to the horizontal direction. Therefore, a large space can be reliably produced in a position arranged rearwards of the down frame portions and over the flat footboard.

According to the motorcycle of the fifth aspect of the present invention, a space produced between the right and left down frame portions is used as a space for accommodating the battery. Therefore, the flat footboard can be herein disposed in a lower position compared to the structure that the battery is disposed under the flat footboard. Accordingly, a large space can be reliably produced over the flat footboard. Further, the battery can be herein disposed in a higher position compared to the structure that the battery is disposed under the flat footboard. Therefore, the battery can be inhibited from getting wet by water on the road. Alternatively, a large storage space can be reliably produced under the seat compared to the structure that the battery is disposed under the seat. Further, the battery is at least partially overlapped with the right and left down frame portions in a side view. Therefore, the battery can be inhibited from being protruded rearwards. Accordingly, a large riding space can be reliably produced in front of the seat in the vehicle longitudinal direction.

According to the motorcycle of the sixth aspect of the present invention, a large space can be reliably produced between the right and left down frame portions. Therefore, a large space can be reliably produced for accommodating the battery.

According to the motorcycle of the seventh aspect of the present invention, a large space can be reliably produced in the middle portion of the flat footboard in the vehicle transverse direction.

According to the motorcycle of the eighth aspect of the present invention, the front edge of the flat footboard is linearly extended in the vehicle transverse direction. Therefore, a large space can be reliably produced in the middle portion of the flat footboard in the vehicle transverse direction, compared to the structure that the front edge of the flat footboard is backwardly protruded in the middle portion thereof in the vehicle transverse direction.

According to the motorcycle of the ninth aspect of the present invention, a large space can be reliably produced in the middle portion of the flat footboard in the vehicle transverse direction.

According to the motorcycle of the tenth aspect of the present invention, the vehicle body can be compactly formed in the vehicle longitudinal direction. Further, the vehicle body frame does not include a frame corresponding to a center frame provided in the well-known motorcycles. Therefore, it is possible to prevent interference between the front wheel and the vehicle body frame even when the front wheel is disposed closer to the vehicle body frame in the vehicle longitudinal direction.

Referring now to the attached drawings which form a portion of this original disclosure:

FIG. 1 is a side view of a motorcycle according to an exemplary embodiment of the present invention;

FIG. 2 is a front view of the motorcycle of the exemplary embodiment of the present invention;

FIG. 3 is a perspective view of a vehicle body frame;

FIG. 4 is a plan view of the vehicle body frame;

FIG. 5 is a side view of the vehicle body frame;

FIG. 6 is a diagram illustrating a front portion of the vehicle body frame seen in an extended direction of a center axis of a head pipe portion;

FIG. 7 is an enlarged side view of a left reinforcement frame part;

FIG. 8 includes cross-sectional views of FIG. 7 respectively sectioned along a line A-A and a line B-B;

FIG. 9 is a perspective view of a front vehicle cover part;

FIG. 10 is a partial enlarged side view of the front vehicle body cover part;

FIG. 11 is a cross-sectional view of FIG. 10 sectioned along a line XI-XI;

FIG. 12 is a cross-sectional view of FIG. 10 sectioned along a line XII-XII;

FIG. 13 is a rear view of a rear cover part;

FIG. 14 is a top view of the motorcycle according to the exemplary embodiment of the present invention;

FIG. 15 is a schematic diagram illustrating working effects of a second reinforcement frame part;

FIG. 16 is a perspective view of a front vehicle body cover portion according to another exemplary embodiment of the present invention; and

FIG. 17 is a side view of a vehicle body frame of a motorcycle according to a prior art.

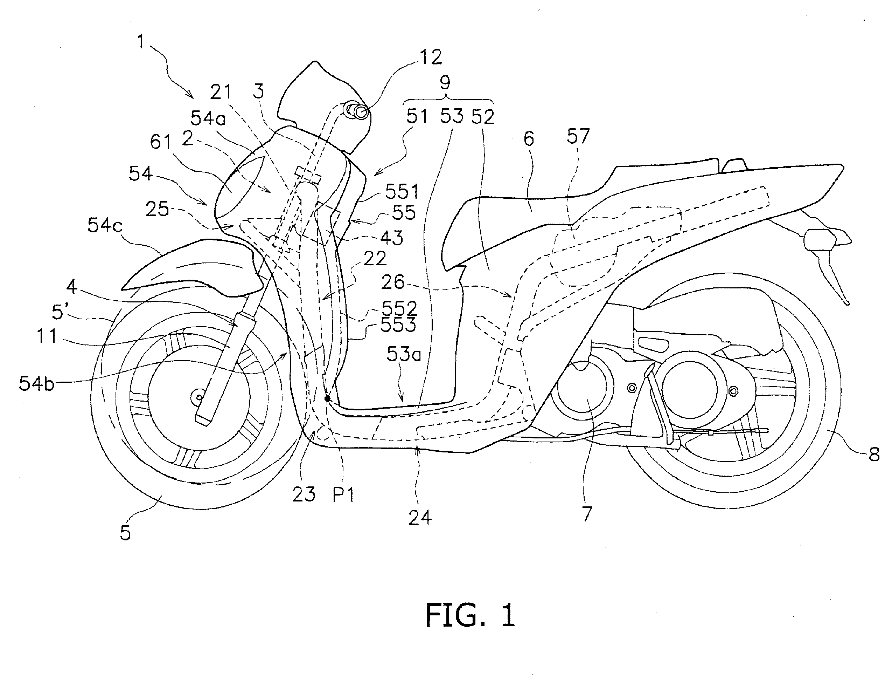

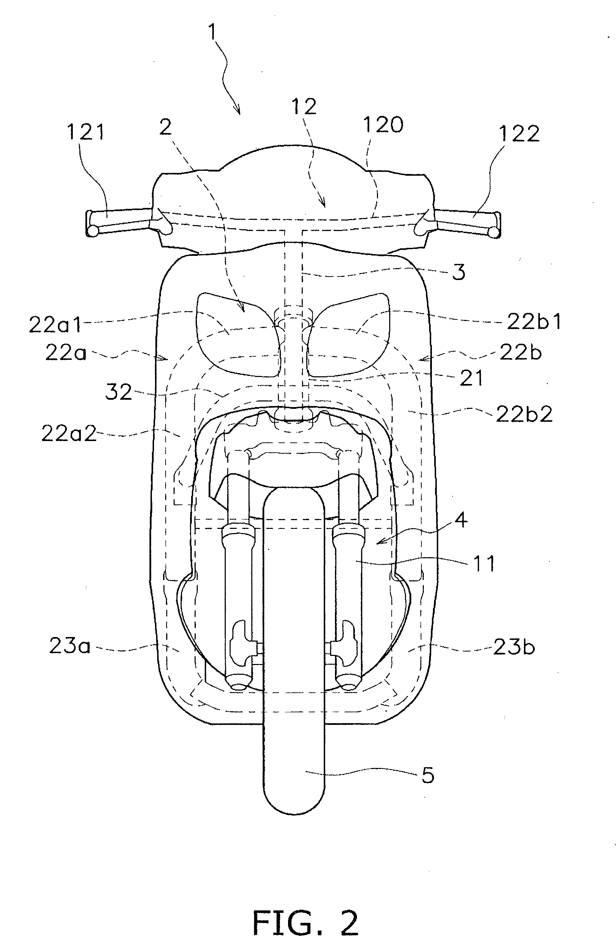

A motorcycle according to an exemplary embodiment of the present invention will be hereinafter explained with reference to figures. FIG. 1 is a side view of a motorcycle 1 according to the exemplary embodiment of the present invention. FIG. 2 is a front view of the motorcycle 1. The motorcycle 1 is a scooter-type motorcycle. The motorcycle 1 includes a vehicle body frame 2, a steering shaft 3, a front fork 4, a front wheel 5, a seat 6, an engine unit 7, a rear wheel 8 and a vehicle body cover 9. It should be noted in the following explanation that the longitudinal (back-and-forth) direction refers to that of the vehicle body seen from a rider seated on the seat 6. Further, the transverse (with or right-and-left) direction refers to that of the vehicle body seen from a rider seated on the seat 6.

The vehicle body frame 2 is mostly formed by iron pipes. The vehicle body frame 2 includes a head pipe portion 21, a down frame portion 22, a first reinforcement frame portion 23, an under frame portion 24, a second reinforcement frame portion 25 and a rear frame portion 26.

The head pipe portion 21 is positioned in the vehicle body center in the transverse direction. The steering shaft 3 is rotatably inserted into the head pipe portion 21. A handle unit 12 is coupled to the top of the steering shaft 3. As illustrated in FIG. 2, the handle unit 12 includes a handle bar 120, a right handle grip 121 and a left handle grip 122. The handle bar 120 is coupled to the top of the steering shaft 3. The right handle grip 121 is attached to the right end of the handle bar 120, while the left handle grip 122 is attached to the left end of the handle bar 120. The front fork 4, configured to be extended and contracted, is coupled to the bottom of the steering shaft 3. The front fork 4 includes a suspension device 11. The wheel 5 is rotatably supported by the bottom portion of the suspension device 11.

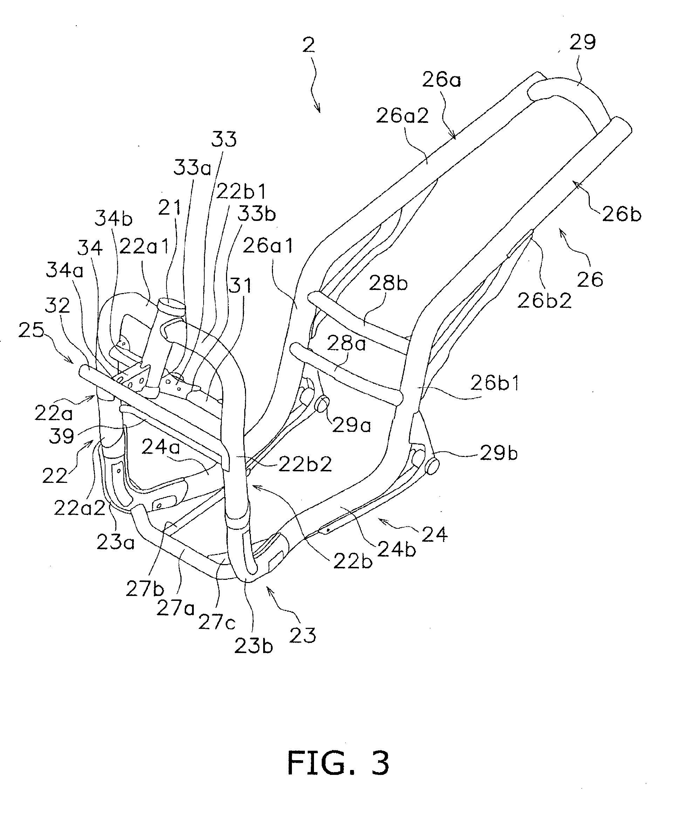

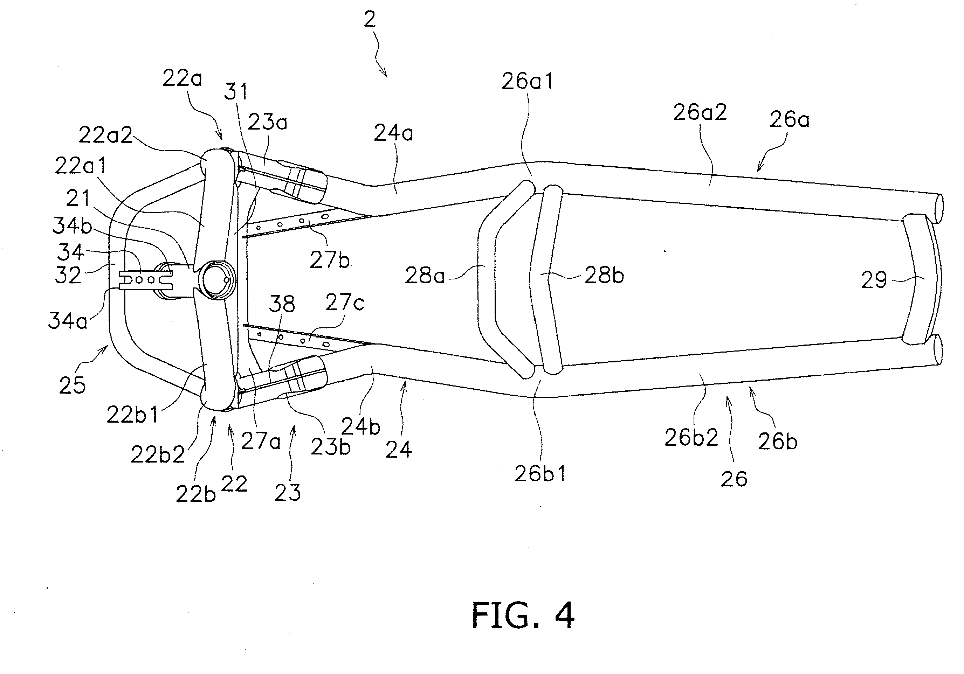

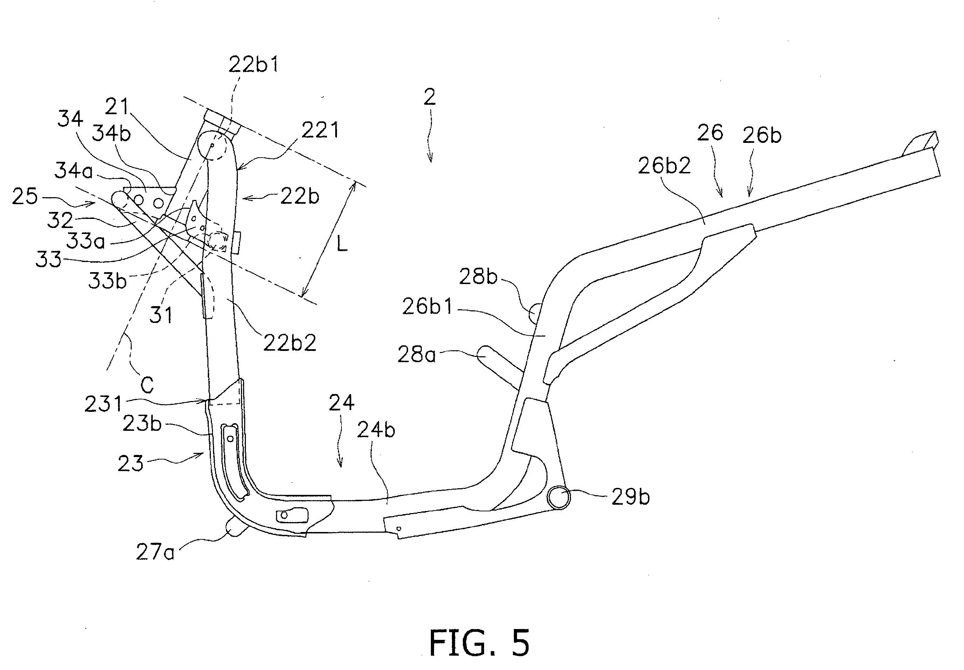

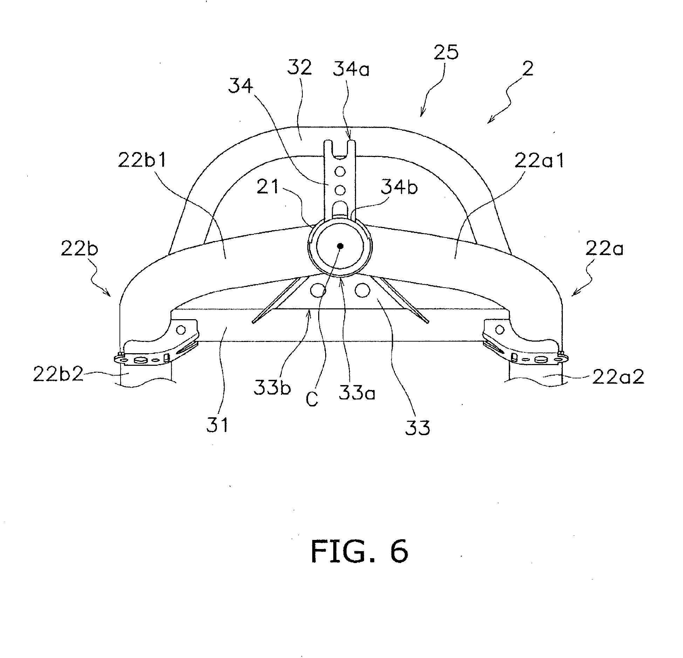

FIG. 3 is a perspective view of the vehicle body frame 2. FIG. 4 is a plan view of the vehicle body frame 2. FIG. 5 is a side view of the vehicle body frame 2. FIG. 6 is a diagram illustrating the front portion of the vehicle body frame 2 seen in an extended direction of the center axis of the head pipe portion 21. As illustrated in FIGS. 3 to 6, the down frame portion 22 is connected to the head pipe portion 21. The down frame portion 22 is downwardly extended from the head pipe portion 21. In the specification of the present application, a state expressed by the term "extended in a vertical (up-and-down) direction" is not limited to a state that an element is extended in parallel to the literally "vertical "direction (i.e., a direction perpendicular to the horizontal direction) . Specifically, the state expressed by the term "extended in a vertical direction" herein refers to a state that smaller one of the angles formed by the literally "vertical" direction and the extended direction of an element is less than or equal to 45 degrees. In other words, the state expressed by the term "extended in a vertical direction" includes a state that an element is extended in a direction slanted with respect to the literally "vertical" direction. Further, a state expressed by the term "extended in a longitudinal (back-and-forth) direction" is not limited to a state that an element is extended in parallel to the longitudinal direction. Specifically, the state expressed by the term "extended in a longitudinal direction" refers to a state that smaller one of the angles formed by the horizontal direction and the extended direction of an element is less than or equal to 45 degrees. In other words, the state expressed by the term "extended in a longitudinal direction" includes a state that an element is extended in a direction slanted with respect to the horizontal direction.

The down frame portion 22 does not include any portion positioned in the transverse middle of the vehicle body frame 2. In other words, the down frame portion 22 does not include any portion downwardly extended from the head pipe portion 21 in the transverse middle of the vehicle body frame 2. Specifically, the down frame portion 22 includes a pair of a right down frame portion 22a and a left down frame portion 22b.

The right down frame portion 22a is connected to a right lateral portion of the head pipe portion 21. The right down frame portion 22a is horizontally extended laterally rightwards from the top end of the head pipe portion 21 and is bent in an intermediate portion thereof for downwardly extending on the right side of the head pipe portion 21. The upper portion and the lower portion of the right down frame portion 22a are at least partially overlapped in the longitudinal direction in a side view. Specifically, the right down frame portion 22a includes a first section 22a1 and a second section 22a2. The first section 22a1 is extended laterally outwards (i.e., laterally rightwards) from the head pipe portion 21. It should be noted that a portion of the first section 22a1, connected to the head pipe portion 21, is horizontally extended from the head pipe portion 21, as illustrated in FIG. 2. However, the first section 22a1 is entirely slanted downwards and laterally outwards in a front view. The second section 22a2 is downwardly extended from the right end of the first section 22a1.

The left down frame portion 22b is connected to the left lateral portion of the head pipe portion 21. The left down frame portion 22b is horizontally extended laterally leftwards from the top end of the head pipe portion 21 and is bent in an intermediate portion thereof for downwardly extending on the left side of the head pipe portion 21. The upper portion and the lower portion of the left down frame portion 22b are at least partially overlapped in the longitudinal direction in a side view. Specifically, the left down frame portion 22b includes a first section 22b1 and a second section 22b2. The first section 22b1 is extended laterally outwards (i.e., leftwards) from the head pipe portion 21. It should be noted that a portion of the first section 22b1, connected to the head pipe portion 21, is horizontally extended from the head pipe portion 21, as illustrated in FIG. 2. However, the first section 22b1 is entirely slanted downwards and laterally outwards in a front view. The second section 22b2 is downwardly extended from the left end of the first section 22b1.

As illustrated in FIG. 2, the right and left down frame portions 22a and 22b are disposed without being overlapped with the front wheel 5 in a front view. In other words, the right and left down frame portions 22a and 22b are disposed in positions displaced from the position of the front wheel 5 in the transverse direction. Specifically, the right down frame portion 22a is disposed rightwards of the front wheel 5 in the transverse direction. On the other hand, the left down frame portion 22b is disposed leftwards of the front wheel 5 in the transverse direction.

As illustrated in FIG. 1, the right and left down frame portions 22a and 22b are not overlapped with the front wheel 5 in a side view where the motorcycle 1 is horizontally parked and the front wheel 5 is disposed along the longitudinal direction of the vehicle (the state will be hereinafter referred to as "a normal state of the front wheel 5"). Further, a position of a front wheel 5' depicted with a dashed two-dotted line in FIG. 1 corresponds to a position of the front wheel 5 where the front fork 4 is maximally contracted. The front wheel 5' is overlapped with the right and left down frame portions 22a and 22b in a side view where the front fork 4 is maximally contracted. In other words, the front wheel 5' is at least partially positioned between the right and left down frame portions 22a and 22b in the transverse direction of the vehicle. It should be noted that the right and left down frame portions 22a and 22b may be overlapped with the front wheel 5 of the normal state in a side view. In this case, the front wheel 5' is more widely overlapped with the right and left down frame portions 22a and 22b in a side view where the front fork 4 is maximally contracted.

The first reinforcement portion 23 is positioned between the down frame portion 22 and the under frame portion 24. The first reinforcement portion 23 includes a right reinforcement frame portion 23a and a left reinforcement frame portion 23b.

As illustrated in FIG. 5, the left reinforcement frame portion 23b is connected to the left down frame portion 22b and is bent rearwards. The left reinforcement frame portion 23b is a member separately provided from the left down frame portion 22b and a left under frame portion 24b to be described. The left reinforcement frame portion 23b has stiffness higher than that of the left down frame portion 22b. Further, the upper portion of the left reinforcement frame portion 23b and the upper portion of the left down frame portion 22b are at least partially overlapped in the longitudinal direction of the vehicle in a side view. In other words, the left reinforcement frame portion 23b is at least partially positioned forwards of the rear end of the upper portion of the left down frame portion 22b in a side view. Specifically, a front end 231 of the left reinforcement frame portion 23b is positioned forwards of a rear edge 221 of the second section 22b2 of the left down frame portion 22b in a side view.

The right reinforcement frame portion 23a is disposed bilaterally symmetrically to the left reinforcement frame portion 23b. The right reinforcement frame portion 23a is connected to the right down frame portion 22a and is bent rearwards. The right reinforcement frame portion 23a is a member separately provided from the right down frame portion 22a and a right under frame portion 24a to be described. The right reinforcement frame portion 23a has stiffness higher than that of the right down frame portion 22a. Further, the positional relation between the right reinforcement frame portion 23a and the right down frame portion 22a is substantially the same as the aforementioned positional relation between the left reinforcement frame portion 23b and the left down frame portion 22b. Therefore, the upper portion of the right reinforcement frame portion 23a and the upper portion of the right down frame portion 22a are at least partially overlapped in the longitudinal direction of the vehicle in a side view. In other words, the right reinforcement frame portion 23a is at least partially positioned forwards of the rear end of the upper portion of the right down frame portion 22a in a side view. Specifically, the front end of the right reinforcement frame portion 23a is positioned forwards of the rear edge of the second section 22a2 of the right down frame portion 22a in a side view.

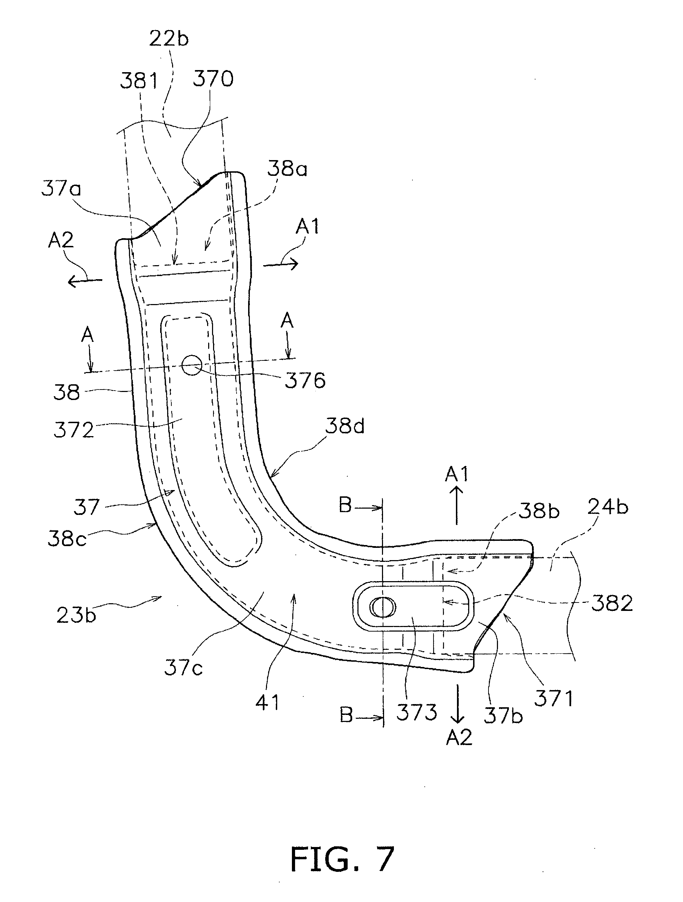

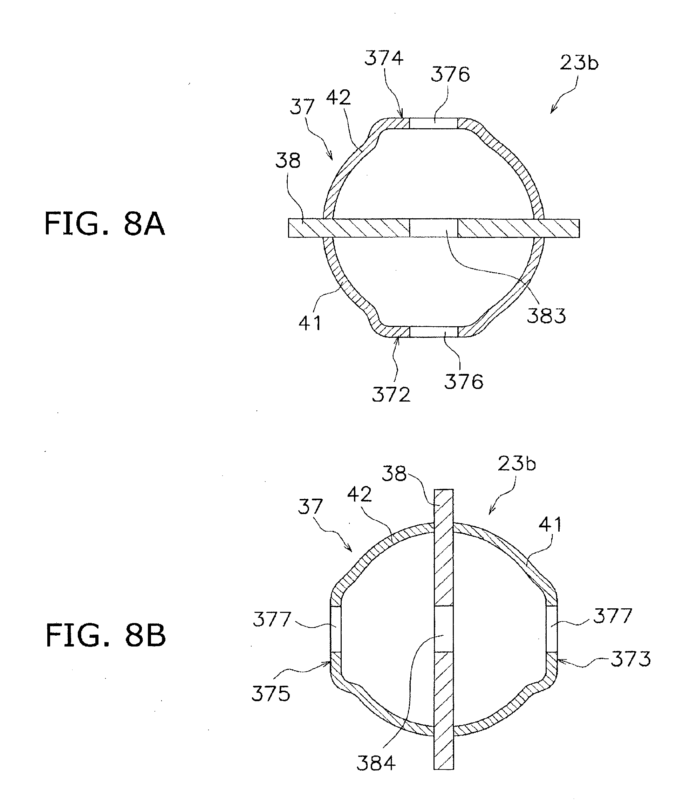

FIG. 7 is an enlarged side view of the left reinforcement frame portion 23b. FIG. 8 (a) is a cross-sectional view of FIG. 7 sectioned along a line A-A. FIG. 8 (b) is a cross-sectional view of FIG. 7 sectioned along a line B-B. As illustrated in FIGS. 7 and 8, the left reinforcement frame portion 23b includes a pipe-shaped member 37 and a plate-shaped member 38. The pipe-shaped member 37 has a bent shape. The pipe-shaped member 37 includes a first pipe portion 37a, a second pipe portion 37b and a third pipe portion 37c. The first pipe portion 37a is an upper portion of the pipe-shaped member 37. The first pipe portion 37a has an inner diameter greater than that of the third pipe portion 37c. Further, the first pipe portion 37a has an outer diameter greater than that of the third pipe portion 37c. An upper end 370 of the first pipe portion 37a is slanted with respect to the axial direction of the pipe-shaped member 37. Specifically, the upper end 370 is slanted upwards and rearwards. The lower end of the aforementioned left down frame portion 22b is inserted and fixed into the first pipe portion 37a. The second pipe portion 37b is a rear portion of the pipe-shaped member 37. The second pipe portion 37b has an inner diameter greater than that of the third pipe portion 37c. Further, the second pipe portion 37b has an outer diameter greater than that of the third pipe portion 37c. A rear end 371 of the second pipe portion 37b is slanted with respect to the axis of the second pipe portion 37b. Specifically, the rear end 371 is slanted upwards and rearwards. The front end of the left under frame portion 24b to be described is inserted into the second pipe portion 37b. The third pipe portion 37c is positioned between the first pipe portion 37a and the second pipe portion 37b in a direction along the axis of the pipe-shaped member 37. The third pipe portion 37c has a bent shape.

Further, the pipe-shaped member 37 includes a first convex portion 372 and a second convex portion 373. The first convex portion 372 is outwardly protruded from the surface of the pipe-shaped member 37. The first convex portion 372 has a flat surface. The first convex portion 372 is extended along the axis of the pipe-shaped member 37. As illustrated in FIG. 8 (a), the pipe-shaped member 37 includes a third convex portion 374 on the opposite side of the first convex portion 372. The third convex portion 374 has the same shape as the first convex portion 372. The second convex portion 373 is outwardly protruded from the surface of the pipe-shaped member 37. The second convex portion 373 has a flat surface. The second convex portion 373 is disposed away from the first convex portion 372 along the axis of the pipe-shaped member 37. The second convex portion 373 is extended along the axis of the pipe-shaped member 37. As illustrated in FIG. 8 (b), the pipe-shaped member 37 includes a fourth convex portion 375 on the opposite side of the second convex portion 373. The fourth convex portion 375 has the same shape as the second convex portion 373. Further, as illustrated in FIG. 8, the pipe-shaped member 37 includes a first half split member 41 and a second half split member 42. The first and second half split members 41 and 42 have bilaterally symmetric shapes through the plate-shaped member 38.

The plate-shaped member 38 is disposed for intersecting with the pipe-shaped member 37 across the diameter of the pipe-shaped member 37. Specifically, the plate-shaped member 38 is interposed between the first half split member 41 and the second half split member 42. As illustrated in FIG. 7, the plate-shaped member 38 has a bent shape similarly to the pipe-shaped member 37. The plate-shaped member 38 is disposed for setting the area thereof in a plan view (see FIG. 4) to be less than that in a side view. The plate-shaped member 38 includes a first recess 381 on an end 38a. The end 38a is one of the ends of the plate-shaped member 38 in the direction along the axis of the pipe-shaped member 37. The first recess 381 is positioned in the inside of the first pipe portion 37a. The bottom end of the left down frame portion 22b, inserted into the first pipe portion 37a, is positioned in the inside of the first recess 381. The plate-shaped member 38 includes a second recess 382 on an end 38b. The end 38b is the other of the ends of the plate-shaped member 38 in the direction along the axis of the pipe-shaped member 37. The second recess 382 is positioned in the inside of the second pipe portion 37b. The front end of the left under frame portion 24b, inserted into the second pipe portion 37b, is positioned in the inside of the second recess 382. The plate-shaped member 38 has a width greater than the outer diameter of the pipe-shaped member 37. Therefore, both edges 38c and 38d of the plate-shaped member 38 extended along the axial direction of the pipe-shaped member 37 are outwardly protruded from the surface of the pipe-shaped member 37. The plate-shaped member 38 and the pipe-shaped member 37 are fixed by welding the protruded portions to the pipe-shaped member 37. Thus, the plate-shaped member 38 and the pipe-shaped member 37 are easily welded due to the shape of the plate-shaped member 38 protruded from the surface of the pipe-shaped member 37.

It should be noted that the pipe-shaped member 37 includes a first through hole 376 penetrating the first convex portion 372 and the third convex portion 374, as illustrated in FIG. 8 (a). On the other hand, the plate-shaped member 38 includes a third through hole 383 in a portion thereof opposed to the first through hole 376. Further, the pipe-shaped member 37 includes a second through hole 377 penetrating the second convex portion 373 and the fourth convex portion 375, as illustrated in FIG. 8 (b). On the other hand, the plate-shaped member 38 includes a fourth through hole 384 in a portion thereof opposed to the second through hole 377. In manufacturing the left reinforcement frame portion 23b, pins are inserted into the through holes for appropriately positioning the first half split member 41, the plate-shaped member 38 and the second half split member 42. The first half split member 41, the plate-shaped member 38 and the second half split member 42 are integrally fixed by means of welding while being appropriately positioned by means of the pins.

The right reinforcement frame portion 23a has a structure bilaterally symmetric to that of the left reinforcement frame portion 23b. Therefore, detailed description of the right reinforcement frame portion 23a will be hereinafter omitted. It should be noted that the left reinforcement frame portion 23b and the right reinforcement frame portion 23a are coupled through a coupling frame portion 27a as illustrated in FIG. 3.

The under frame portion 24 is connected to the lower end of the down frame portion 22 through the first reinforcement portion 23. Specifically, the under frame portion 24 includes the right under frame portion 24a and the left under frame portion 24b. The right under frame portion 24a is connected to the right reinforcement frame portion 23a. The right under frame portion 24a is horizontally extended rearwards from the right reinforcement frame portion 23a. The left under frame portion 24b is connected to the left reinforcement frame portion 23b. The left under frame portion 24b is horizontally extended rearwards from the left reinforcement frame portion 23b. As illustrated in FIGS. 3 and 4, the longitudinal center portion of the right under frame portion 24a is coupled to the aforementioned coupling frame portion 27a through a coupling frame portion 27b, while the longitudinally middle portion of the left under frame portion 24b is coupled to the coupling frame portion 27a through a coupling frame portion 27c.

The rear frame portion 26 is connected to the rear end of the under frame portion 24. The rear frame portion 26 is upwardly extended from the rear end of the under frame portion 24. Specifically, the rear frame portion 26 includes a right rear frame portion 26a and a left rear frame portion 26b.

The right rear frame portion 26a is connected to the rear end of the right under frame portion 24a. The right rear frame portion 26a is backwardly extended from the rear end of the right under frame portion 24a in an obliquely upward direction. Specifically, the right rear frame portion 26a is roughly vertically extended from the rear end of the right under frame portion 24a, then backwardly bent in an intermediate portion thereof, and finally backwardly extended in an obliquely upward direction. More specifically, the right rear frame portion 26a includes a first section 26a1 and a second section 26a2, as illustrated in FIG. 3. The first section 26a1 is backwardly extended from the rear end of the right under frame portion 24a in an obliquely upward direction. The second section 26a2 is backwardly extended from the first section 26a1 in an obliquely upward direction. The slant angle of the first section 26a1 with respect to the right under frame portion 24a is greater than that of the second section 26a2 with respect to the right under frame portion 24a.

The left rear frame portion 26b is connected to the rear end of the left under frame portion 24b. The left rear frame portion 26b is backwardly extended from the rear end of the left under frame portion 24b in an obliquely upward direction. Specifically, the left rear frame portion 26b is roughly vertically extended from the rear end of the left under frame portion 24b, then bent rearwards in an intermediate portion thereof, and finally backwardly extended in an obliquely upward direction, as illustrated in FIG. 5. More specifically, the left rear frame portion 26b includes a first section 26b1 and a second section 26b2. The first section 26b1 is backwardly extended from the rear end of the left under frame portion 24b in an obliquely upward direction. The second section 26b2 is backwardly extended from the first section 26b1 in an obliquely upward direction. The slant angle of the first section 26b1 with respect to the left under frame portion 24b is greater than that of the second section 26b2 with respect to the left under frame portion 24b.

As illustrated in FIG. 3, the first section 26a1 of the right rear frame portion 26a and the first section 26b1 of the left rear frame portion 26b are coupled through coupling frame portions 28a and 28b. Further, the rear end of the right rear frame portion 26a and the rear end of the left rear frame portion 26b are coupled through a coupling frame portion 29.

A right bracket 29a is attached to the right under frame portion 24a and the right rear frame portion 26a. On the other hand, a left bracket 29b is attached to the left under frame portion 24b and the left rear frame portion 26b. A pivot shaft (not illustrated in the figures), extended in the transverse direction of the vehicle, is attached to the right and left brackets 29a and 29b. Further, the engine unit 7 of a unit swing type illustrated in FIG. 1 is pivotably attached onto the pivot shaft. The engine unit 7 includes an output shaft (not illustrated in the figures). The rear wheel 8 is rotatably supported by the output shaft of the engine unit 7.

The second reinforcement frame portion 25 is disposed in the surrounding of the head pipe portion 21. The second reinforcement frame portion 25 includes a first cross frame portion 31, a second cross frame portion 32, a first connection frame portion 33 and a second connection frame portion 34. Each of the first and second cross frame portions 31 and 32 connects the right down frame portion 22a and the left down frame portion 22b. Each of the first and second cross frame portions 31 and 32 has stiffness set to be lower than that of each of the right and left down frame portions 22a and 22b.

The first cross frame portion 31 connects the right down frame portion 22a and the left down frame portion 22b while passing rearwards of the head pipe portion 21, as illustrated in FIG. 6 seen in an extended direction of a center axis C of the head pipe portion 21. Further, the first cross frame portion 31 is also connected to the head pipe portion 21. The first cross frame portion 31 is positioned rearwards of the head pipe portion 21, and is indirectly connected to the head pipe portion 21 through the first connection frame portion 33 connected to the bottom end of the head pipe portion 21. The first cross frame portion 31 has a linear shape.

As illustrated in FIG. 5, the first cross frame portion 31 is disposed within a region L ranged from the top end to the bottom end of the head pipe portion 21 in the extended direction of the center axis C of the head pipe portion 21. Further, both of a connected portion 33a between the first connection frame portion 33 and the head pipe portion 21 and a connected portion 33b between the first connection frame portion 33 and the first cross frame portion 31 are positioned within the region L.

The second cross frame portion 32 connects the right down frame portion 22a and the left down frame portion 22b while passing forwards of the head pipe portion 21, as illustrated in FIG. 6 seen in the extended direction of the center axis C of the head pipe portion 21. Further, the second cross frame portion 32 is also connected to the head pipe portion 21. The second cross frame portion 32 is positioned forwards of the head pipe portion 21 and is indirectly connected to the head pipe portion 21 through the second connection frame portion 34 connected to the bottom end of the head pipe portion 21. As illustrated in FIG. 5, a connected portion between the second cross frame portion 32 and the head pipe portion 21, i.e., a connected portion 34a between the second cross frame portion 32 and the second connection frame portion 34, is positioned within the region L. Further, a connected portion 34b between the second connection frame portion 34 and the head pipe portion 21 is positioned within the region L. On the other hand, connected parts between the second cross frame portion 32 and the right and left down frame portions 22a and 22b are positioned outside of the region L. In other words, only the upper portion of the second cross frame portion 32 is disposed within the region L while the other portion thereof is not.

As illustrated in FIG. 1, the seat 6 is disposed over the rear frame portion 26. The seat 6 is positioned rearwards of the head pipe portion 21. The seat 6 is supported by the vehicle body frame 2. Specifically, the seat 6 is directly or indirectly attached to the right and left rear frame portions 26a and 26b. As illustrated in FIG. 1, the seat 6 is a tandem seat for allowing two people (i.e., a rider and a passenger) to be seated thereon.

The vehicle body cover 9 includes a front vehicle body cover portion 51, a rear vehicle body cover portion 52 and an under cover portion 53. The front vehicle body cover portion 51 covers the surrounding of the head pipe portion 21. The front vehicle body cover portion 51 includes a front face cover portion 54 and a rear face cover portion 55. The front face cover portion 54 covers the front side of the head pipe portion 21. An upper section 54a of the front face cover portion 54 is positioned higher than the front wheel 5. A head light 61 is disposed in the upper section 54a of the front face cover portion 54. A lower section 54b of the front face cover portion 54 is positioned rearwards of the front wheel 5. The transversely middle portion of the lower section 54b of the front face cover portion 54 is backwardly recessed for preventing interference with the front wheel 5. It should be noted that a front fender 54c is disposed over the front wheel 5.

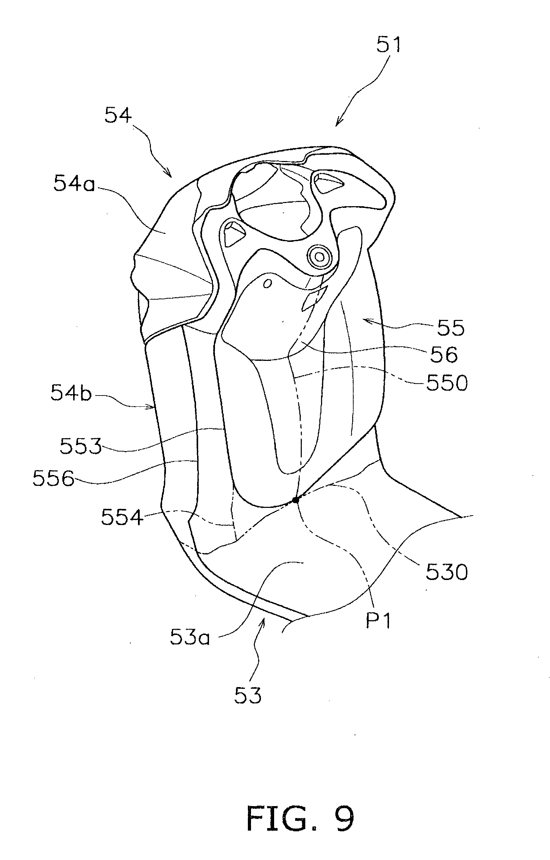

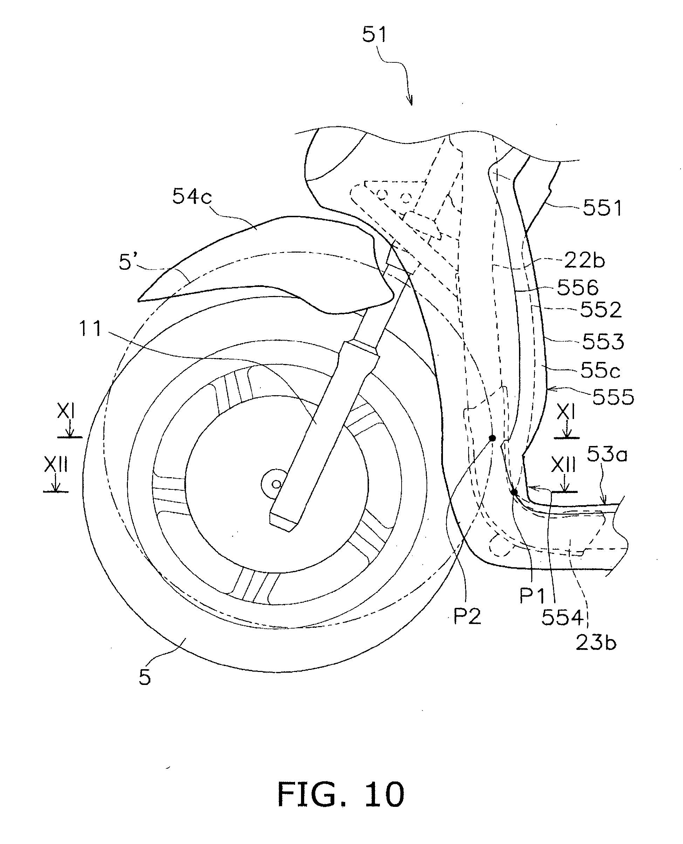

The rear face cover portion 55 covers the back side of the head pipe portion 21. FIG. 9 is a perspective view of the front vehicle body cover portion 51. FIG. 10 is an enlarged partial side view of the front vehicle body cover portion 51. In FIG. 10, a solid line 551 and a broken line 552 depict the shape of the transverse center of the rear face cover portion 55. The solid line 551 and the broken line 552 correspond to a dashed two-dotted line 550 conceptually depicted in FIG. 9. The dashed two-dotted line 550 depicted in FIG. 9 will be hereinafter referred to as "a rear face center line 550". The solid line 551 depicted in FIG. 10 will be hereinafter referred to as "an upper section 551 of the rear face center line 550". On the other hand, the broken line 552 depicted in FIG. 10 will be hereinafter referred to as "a lower section 552 of the rear face center line 550".

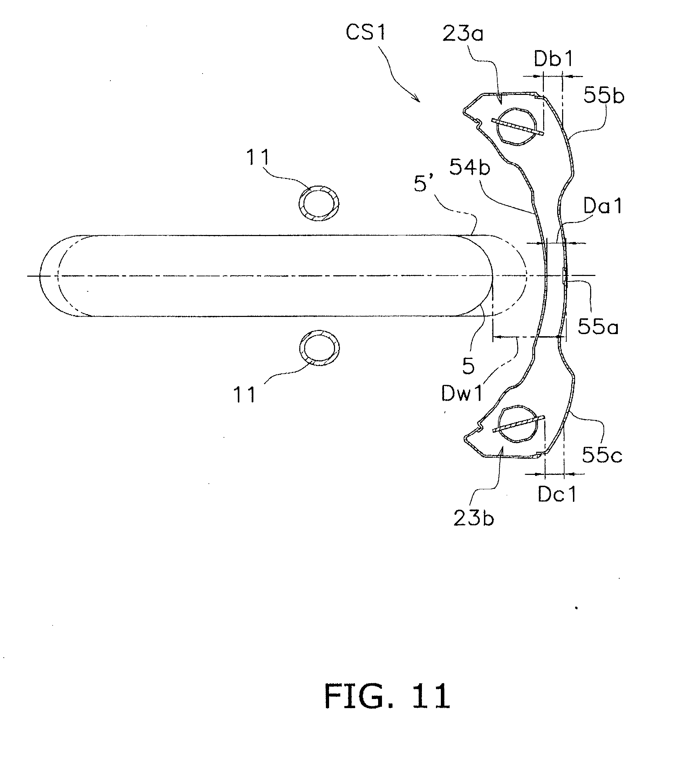

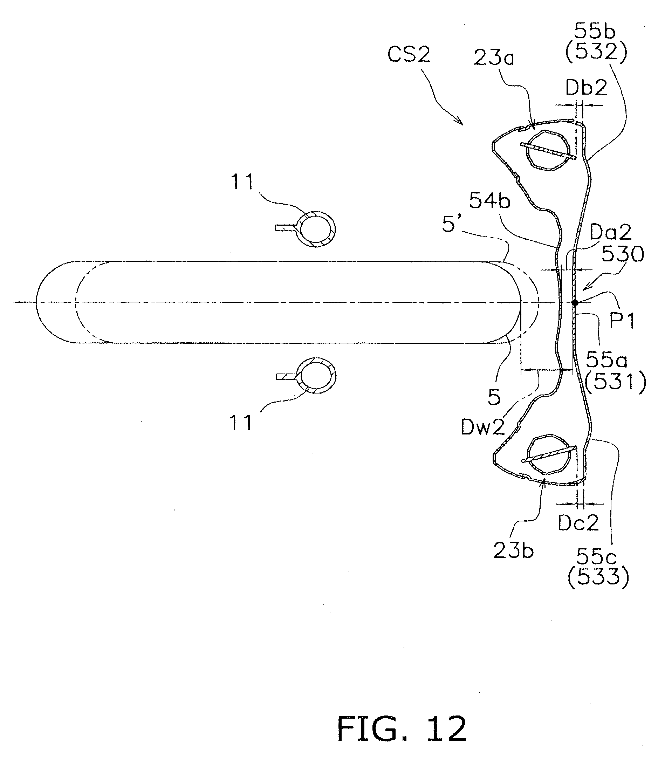

The upper section 551 of the rear face center line 550 is slanted downwards and forwards. The lower section 552 of the rear face center line 550 is positioned forwards of a left rear edge line 553 to be described. The lower section 552 of the rear face center line 550 is backwardly curved in a convex shape. The bottom end of the lower section 552 of the rear face center line 550 is slanted downwards and forwards. FIG. 11 is a cross-sectional view of FIG. 10 sectioned along a line XI-XI. Specifically, FIG. 11 illustrates a cross-section CS1 (hereinafter referred to as "a first cross-section CS1") of FIG. 10 sectioned along a horizontal plane passing through a rear end P2 of the front wheel 5' under the condition that the front fork 4 is maximally contracted. FIG. 12 is a cross-sectional view of FIG. 10 sectioned along a line XII-XII. Specifically, FIG. 12 illustrates a cross-section CS2 (hereinafter referred to as "a second cross-section CS2") of FIG. 10 sectioned along a horizontal plane passing through a transverse center P1 of a front edge 530 of a flat footboard 53a to be described. In other words, the second cross-section CS2 illustrated in FIG. 12 is positioned lower than the first cross-section CS1 illustrated in FIG. 11. As illustrated in FIGS. 11 and 12, a transversely middle section 55a of the lower portion of the rear face cover portion 55 (hereinafter referred to as "a rear face middle section 55a") is recessed forwards. Further, a longitudinal distance Da2, produced between the lower section 54b of the front face cover portion 54 and the transverse center of the rear face middle section 55a on the second cross-section CS2, is less than a longitudinal distance Da1 produced between the lower section 54b of the front face cover portion 54 and the transverse center of the rear face middle section 55a on the first cross-section CS1. Further, a distance Dw2, produced between the transverse center of the rear face middle section 55a and the front wheel 5 of a normal state on the second cross-section CS2, is less than a distance Dw1 produced between the transverse center of the rear face middle section 55a and the front wheel 5 of a normal state on the first cross-section CS1. In the motorcycle 1 according to the present exemplary embodiment, the vehicle body frame 2 does not thus include any frame corresponding to a center frame provided in the well-known motorcycles. Therefore, the rear face cover portion 55 can be recessed forwards in the rear face middle section 55a. The shape of the rear face cover portion 55 makes it possible to longitudinally expand the space for a rider positioned rearwards of the rear face middle section 55a of the rear face cover portion 55. Further, the rear face middle section 55a can be disposed adjacent to the front wheel 5. Therefore, the front portion of the motorcycle 1, including the front wheel 5, can be compactly formed.

A rear face rightward section 55b is disposed rightwards of the rear face middle section 55a, while a rear face leftward section 55c is disposed leftwards of the rear face middle section 55a. The rear face rightward section 55b is disposed rearwards of the right reinforcement frame portion 23a. The rear face leftward section 55c is disposed rearwards of the left reinforcement frame portion 23b. The rear face rightward section 55b and the rear face leftward sections 55c are respectively protruded rearwards of the rear face middle section 55a. In FIGS. 9 and 10, a solid line 553 depicts the shape of the rear edge of the rear face leftward section 55c in a side view (the solid line 553 will be hereinafter referred to as "the left rear edge line 553"). A lower section 554 of the left rear edge line 553 is positioned forwards of a rear end 555 of the left rear edge line 553. It should be noted that FIG. 9 conceptually illustrates a position corresponding to the lower section 554 with a dashed two-dotted line. Further, a solid line 556 depicts the shape of a laterally outermost portion of the rear face cover portion 55 (the solid line 556 will be hereinafter referred to as "a left outer line 556") . The left outer line 556 is positioned forwards of the left rear edge line 553 in a side view.

Further, as illustrated in FIGS. 11 and 12, a longitudinal distance Db2, produced between the rear face rightward section 55b and the right reinforcement frame portion 23a on the second cross-section CS2, is less than a longitudinal distance Db1 produced between the rear face rightward section 55b and the right reinforcement frame portion 23a on the first cross-section CS1. Likewise, a longitudinal distance Dc2, produced between the rear face leftward section 55c and the left reinforcement frame portion 23b on the second cross-section CS2, is less than a longitudinal distance Dc1 produced between the rear face leftward section 55c and the left reinforcement frame portion 23b on the first cross-section CS1. In other words, the backwardly protruded length of the rear face rightward section 55b and that of the rear face leftward section 55c on the second cross-section CS2 positioned lower than the first cross-section CS1 are less than those on the first cross-section CS1. The shape of the rear face cover portion 55 makes it possible to longitudinally expand the space for a rider positioned rearwards of the lower portion of the rear face rightward section 55b and that of the rear face leftward section 55c.

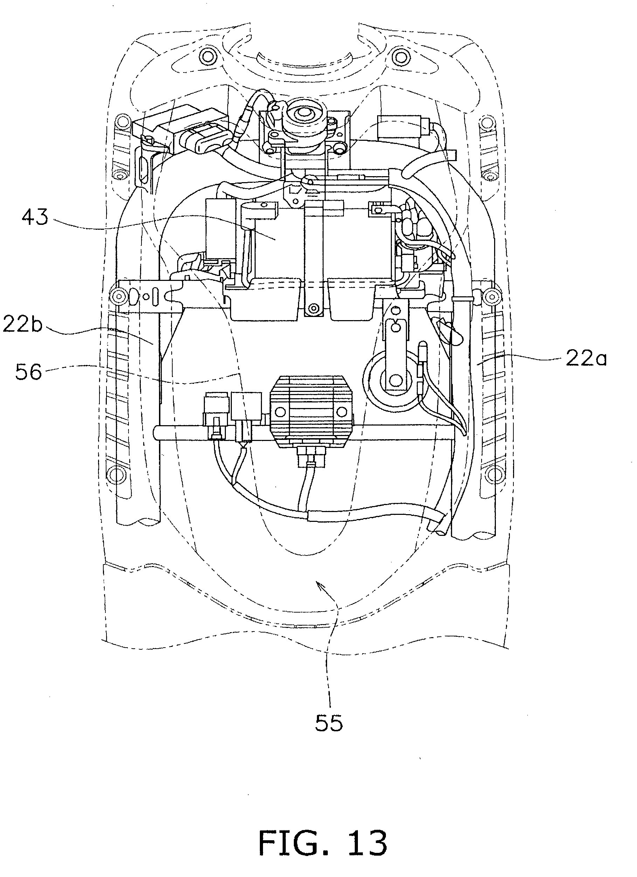

As illustrated in FIG. 9, the rear face cover portion 55 further includes a lid member 56. The lid member 56 is positioned in the transverse middle of the rear face cover portion 55. The lid member 56 is detachably attached to the other portion of the rear face cover portion 55. FIG. 13 is a rear view of the rear face cover portion 55 depicted with a dashed two-dotted line. As illustrated in FIG. 13, a battery 43 is disposed forwards of the lid member 56. The battery 43 is disposed transversely between the right down frame portion 22a and the left down frame portion 22b. As illustrated in FIG. 1, the battery 43 is partially overlapped with the right down frame portion 22a and the left down frame portion 22b in a side view.

As illustrated in FIG. 1, the rear vehicle body cover portion 52 is positioned under the seat 6. The rear vehicle body cover portion 52 covers the front side and the both lateral sides of the rear frame portion 26 disposed under the seat 6. Further, a fuel tank 57 is disposed under the seat 6. The fuel tank 57 is disposed between the aforementioned second sections 26a2 and 26b2 of the right and left rear frame portions 26a and 26b (see FIG. 3).

The under cover portion 53 is positioned between the front vehicle body cover portion 51 and the rear vehicle body cover portion 52. The under cover portion 53 couples the front vehicle body cover portion 51 and the rear vehicle body cover portion 52. The under cover portion 53 includes the flat footboard 53a. The flat footboard 53a is attached to the right and left under frame portions 24a and 24b. The flat footboard 53a is positioned longitudinally between the front wheel 5 and the seat 6. The flat footboard 53a is positioned lower than the seat 6. The flat footboard 53a is a surface on which a rider seated on the seat 6 puts his/her feet during travelling of the vehicle. The flat footboard 53a is positioned over the right and left under frame portions 24a and 24b. The flat footboard 53a is positioned longitudinally between the down frame portion 22 and the rear frame portion 26. The flat footboard 53a has an entirely flat shape in the transverse direction.

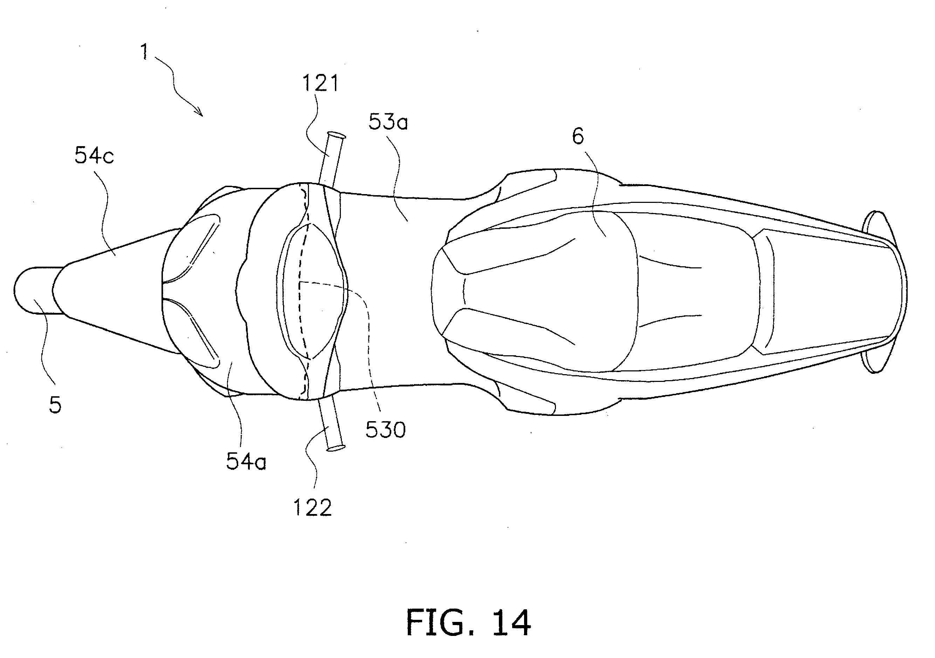

As illustrated in FIG. 9, the front edge 530 of the flat footboard 53a is connected to the bottom end of the aforementioned rear face cover portion 55. Therefore, FIG. 12 illustrates the shape of the front edge 530 of the flat footboard 53a as well as the shape of the bottom end of the rear face cover portion 55. The transversely middle portion of the front edge 530 of the flat footboard 53a is forwardly recessed. Specifically, the front edge 530 of the flat footboard 53a includes a front edge middle section 531, a front edge rightward section 532 and a front edge leftward section 533. The front edge middle section 531 is disposed transversely between the front edge rightward section 532 and the front edge leftward section 533. The center P1 of the front edge middle section 531 in the transverse direction (hereinafter referred to as "a front edge center point P1"), i.e., the transverse center of the front edge 530 of the flat footboard 53a, is disposed forwards of the rear end of the front edge rightward section 532 and that of the front edge leftward section 533. As illustrated in FIG. 10, the front edge center point P1 is overlapped with the right and left reinforcement frame portions 23a and 23b in a side view. The front edge center point P1 is overlapped with the lower section of the left outer line 556 in a side view. Further, the front edge center point P1 is positioned forwards of the aforementioned left rear edge line 553 in a side view, as illustrated in FIG. 1. More specifically, the front edge center point P1 is positioned forwards of the aforementioned lower section 554 of the left rear edge line 553 in a side view. The front edge center point P1 is positioned lower than the rear end P2 of the front wheel 5' under the condition that the front fork 4 is maximally contracted. Yet further, the front edge center point P1 is positioned forwards of the rear end of the upper section 551 of the rear face center line 550 in a side view, as illustrated in FIG. 1. FIG. 14 is a top view of the motorcycle 1. As illustrated in FIG. 14, the front edge 530 of the flat footboard 53a is entirely positioned forwards of the handle grips 121 and 122.

The motorcycle 1 according to the present exemplary embodiment has the following features.

The vehicle body frame 2 does not include any frame, which is extended from the head pipe portion 21 to a position lower than the flat footboard 53a while being disposed transversely between the right down frame portion 22a and the left down frame portion 22b. In short, the vehicle body frame 2 does not include a center frame provided in the well-known motorcycles. Therefore, the longitudinal length of the flat footboard 53a can be expanded.

Further, stiffness of the vehicle body frame 2 of the present exemplary embodiment is reinforced by the first reinforcement portion 23 without using the center frame. Specifically, the right reinforcement portion 23a is disposed between the right down frame portion 22a and the right under frame portion 24a, while the left reinforcement frame portion 23b is disposed between the left down frame portion 22b and the left under frame portion 24b. Therefore, load acting on a portion between the down frame portion 22 and the under frame portion 24 can be supported by the first reinforcement portion 23. Further, the coupling frame portion 27a is fixed to the right and left reinforcement frame portions 23a and 23b. Therefore, the right and left reinforcement frame portions 23a and 23b can receive and support load transferred from the coupling frame portion 27a. Therefore, the vehicle body frame 2 can reliably obtain required stiffness even without being provided with a center frame provided in the well-known motorcycles.

Each of the right and left reinforcement frame portions 23a and 23b includes the pipe-shaped member 37 and the plate-shaped member 38. Therefore, high stiffness can be obtained by the plate-shaped member 38. Especially, the plate-shaped member 38 is disposed for setting the area thereof in a plan view to be less than that in a side view. Therefore, each of the right and left reinforcement frame portions 23a and 23b has high stiffness against load (see the arrow A1 in FIG. 7) acting to backwardly bend the first pipe portion 37a and upwardly bend the second pipe portion 37b. Further, each of the right and left reinforcement frame portions 23a and 23b has high stiffness against load (see the arrow A2 in FIG. 7) acting to forwardly bend the first pipe portion 37a and downwardly bend the second pipe portion 37b. Therefore, the vehicle body frame 2 can obtain higher stiffness against a direction of bending the first reinforcement portion 23 when load is applied to the front wheel 5 from ahead of the vehicle body.

The down frame portion 22 is extended in the direction perpendicular to the horizontal direction. Therefore, a large space can be reliably produced in a position arranged rearwards of the down frame portion 22 and upwards of the flat footboard 53a.

The space, produced between the right and left down frame portions 22a and 22b of the down frame portion 22, is used as a space for accommodating the battery 43. Therefore, the flat footboard 53a can be disposed in a lower position compared to the structure that the battery 43 is disposed under the flat footboard 53a. Accordingly, a large space can be reliably produced over the flat footboard 53a. Alternatively, a large storage space can be reliably produced under the seat 6 compared to the structure that the battery 43 is disposed under the seat 6. Further, the battery 43 and the fuel tank 57, which are heavy components, are separately disposed back and forth in the vehicle body. Therefore, weight balance of the motorcycle can be enhanced.

Each of the right and left down frame portion 22a and 22b includes a portion horizontally extended laterally outwards from the head pipe portion 21. Therefore, a large space can be reliably produced between the right and left down frame portions 22a and 22b of the down frame portion 22. In other words, a large space can be reliably produced for accommodating the battery 43.

As illustrated in FIG. 12, the front edge middle section 531 of the flat footboard 53a is disposed forwards of the rear end of the front edge rightward section 532 and that of the front edge leftward section 533. Further, the front edge center point P1 is overlapped with the right and left reinforcement frame portions 23a and 23b in a side view, as illustrated in FIG. 10. The motorcycle 1 of the present exemplary embodiment does not include a center frame provided in the well-known motorcycles. Therefore, the front edge 530 of the flat footboard 53a can be thus largely extended forwards. In other words, a longitudinally large space can be reliably produced over the flat footboard 53a.

When the suspension device 11 is maximally contracted, the front wheel 5' is overlapped with the right down frame portion 22a and the left down frame portion 22b in a side view. In other words, a small distance is produced between the front wheel 5 and the down frame portion 22 in the longitudinal direction. The longitudinal length of the vehicle body can be thereby reduced. Further, the vehicle body frame 2 does not include any frame corresponding to a center frame provided in the well-known motorcycles. Therefore, it is possible to prevent interference between the front wheel 5 and the vehicle body frame 2 even when the front wheel 5 is disposed closer to the vehicle body frame 2 in the longitudinal direction.

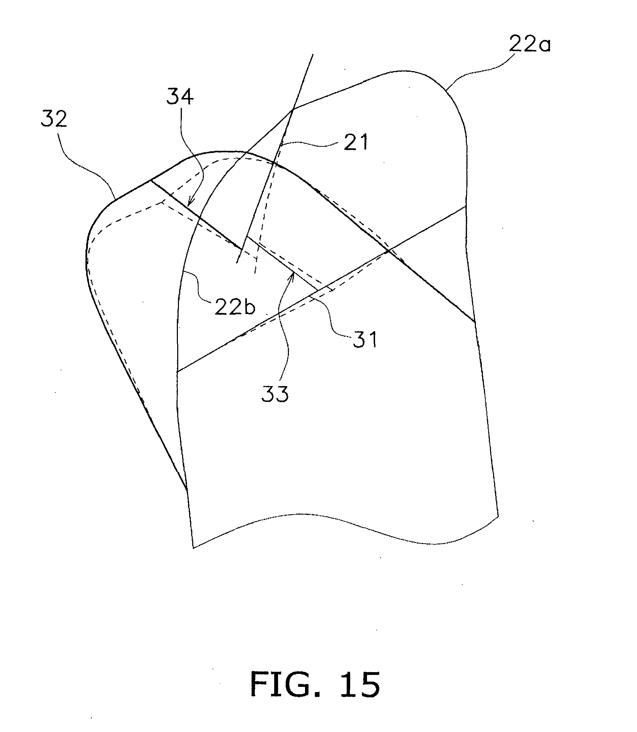

Stiffness of the vehicle body frame 2 is further reinforced by the second reinforcement frame portion 25 although the vehicle body frame 2 does not include a center frame. Specifically, the vehicle body frame 2 is provided with the first and second cross frame portions 31 and 32. The first and second cross frame portions 31 and 32 connect the right and left down frame portions 22a and 22b, while passing rearward or forward of the head pipe 21, respectively. Further, the first and second cross frame portions 31 and 32 are connected to the head pipe 21. When rearward external force is applied to the front wheel 5, for instance, the first and second cross frame portions 31 and 32 are deformed. Accordingly, the external force applied to the vehicle body frame 2 is relieved by the first and second cross frame portions 31 and 32. As illustrated in FIG. 15 in detail, the bottom end of the head pipe portion 21 is moved rearwards and is deformed in an arch shape when rearward external force is applied to the front wheel 5. When the head pipe portion 21 is deformed, the first and second cross frame portions 31 and 32 connected to the head pipe portion 21 are also deformed. The external force applied to the vehicle body frame 2 is thereby relieved. Thus, the vehicle body frame 2 can obtain sufficiently high stiffness and strength without being provided with a center frame for reinforcing the right and left down frame portions 22a and 22b of the down frame portion 22. It should be noted in FIG. 15 that a solid line depicts the vehicle body frame 2 where rearward external force is not applied to the front wheel 5, whereas a broken line depicts the vehicle body frame 2 where rearward external force is applied to the front wheel 5.

Further, the first cross frame portion 31 is positioned within the region L, as illustrated in FIG. 5. Therefore, the first and second cross frame portions 31 and 32 are further easily deformed when external force is applied to the head pipe portion 21. It is thereby possible to further effectively relieve the external force to be applied to the vehicle body frame 2.

An exemplary embodiment of the present invention has been described above. However, the present invention is not limited to the aforementioned exemplary embodiment, and a variety of changes can be herein made without departing from the scope of the present invention.

In the aforementioned exemplary embodiment, the vehicle body frame 2 is formed by fixing iron pipes by means of welding. In the present invention, however, structure of the vehicle body frame is not limited to the above. For example, the vehicle body frame may be integrally formed by means of casting. Further, the vehicle body frame of the present invention may not be necessarily made of iron and may be made of any other suitable material except for iron. For example, the vehicle body frame may be made of aluminum or aluminum alloy. Alternatively, the vehicle body frame may be made of magnesium alloy.

The specific structure of the reinforcement frame portion of the present invention is not limited to the first reinforcement portion 23 of the aforementioned exemplary embodiment as long as it has stiffness higher than that of the down frame portion 22. Further, the reinforcement frame portion of the present invention preferably has stiffness higher than that of the under frame portion 24. For example, the reinforcement frame portion may be formed by a pipe having thickness greater than that of the down frame portion 22 and that of the under frame portion 24. Further, the reinforcement frame portion may be integrally formed by means of casting without being formed by integrally welding a plurality of members. Yet further, the reinforcement frame portion may be made of a material different from that of the down frame portion 22 and the under frame portion 24 in order to obtain high stiffness.

The vehicle body frame of the present invention may not include the second reinforcement frame portion 25 of the aforementioned exemplary embodiment. Further, the structure of the second reinforcement frame portion may not be limited to that of the aforementioned exemplary embodiment. For example, the first cross frame portion may be directly connected to the head pipe portion without intervention of the first connection frame portion. Likewise, the second cross frame portion may be directly connected to the head pipe portion without intervention of the second connection frame portion. In the aforementioned exemplary embodiment, the first cross frame portion 31 has a linear shape. However, the first cross frame portion may have a curved or bulged shape, for instance. In this case, the first cross frame portion is preferably formed in a backwardly convex shape seen in the extended direction of the center axis C of the head pipe portion 21.

The flat footboard may not be necessarily formed in a completely flat shape and may include some convexo-concaves. Alternatively, the flat footboard may have a curved surface.

As described in the aforementioned exemplary embodiment, when the rear face center line 550 and the flat footboard 53a are connected for forming a predetermined angle in a side view (see FIG. 10), the front edge center point P1 may be defined as the apex of the angle formed by the rear face center line 550 and the flat footboard 53a. In this case, the front edge 530 of the flat footboard 53a may be defined as an intersection line between the flat footboard 53a and a horizontal plane passing through the front edge center point P1. When the rear face center line 550 and the flat footboard 53a are connected by a curved surface, the front edge center point P1 may be defined as an arbitrary point arranged on the transversely center line of the curved surface.

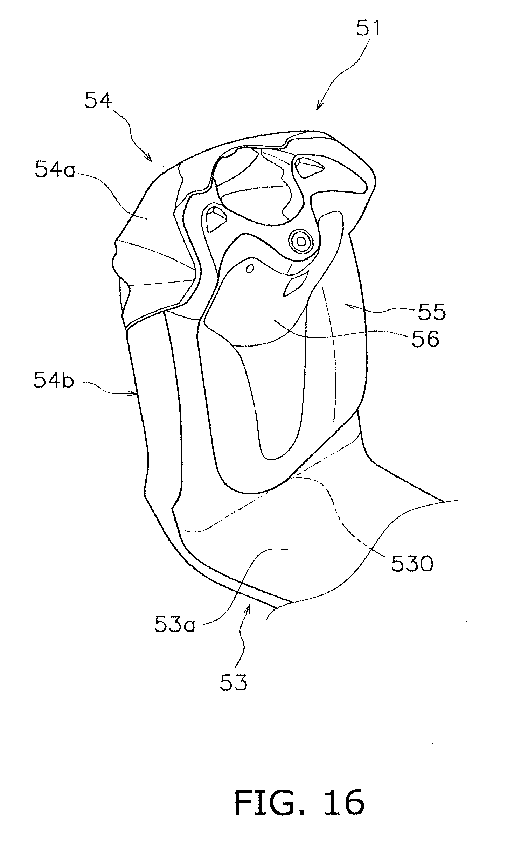

As illustrated in FIG. 16, the front edge 530 of the flat footboard 53a may be linearly extended in the transverse direction. In other words, the transversely middle portion of the front edge 530 of the flat footboard 53a maybe disposed longitudinally in the same position as the lateral ends of the front edge 530.

According to the present invention, it is possible to provide a motorcycle for reliably obtaining stiffness required for a vehicle body frame, and simultaneously, for extending the longitudinal length of a footboard.
- 1: Motorcycle
- 2: Vehicle body frame
- 3: Steering shaft
- 4: Front fork
- 5: Front wheel
- 6: Seat
- 11: Suspension device
- 21: Head pipe portion
- 22a: Right down frame portion
- 22b: Left down frame portion
- 23a: Right reinforcement frame portion
- 23b: Left reinforcement frame portion
- 24a: Right under frame portion
- 24b: Left under frame portion
- 37: Pipe-shaped member
- 38: Plate-shaped member
- 43: Battery
- 53a: Flat footboard

## Claims

1. A motorcycle (1), comprising:
a vehicle body frame (2) including: a head pipe portion (21); a left down frame portion (22b) downwardly extended laterally away from the head pipe portion (21) to the left; a right down frame portion (22a) downwardly extended laterally away from the head pipe portion (21) to the right; a left reinforcement frame portion (23b) connected to the left down frame portion (22b); a right reinforcement frame portion (23a) connected to the right down frame portion (22a); a left under frame portion (24b) connected to the left reinforcement frame portion (23b), the left under frame portion (24b) extended rearwards;
and a right under frame portion (24a) connected to the right reinforcement frame portion (23a), the right under frame portion (24a) extended rearwards;
a steering shaft (3) inserted into the head pipe portion (21);
a front fork (4) connected to a bottom portion of the steering shaft (3);
a front wheel (5) supported by a bottom portion of the front fork (4);
a seat (6) positioned rearwards of the head pipe portion (21), the seat (6) supported by the vehicle body frame (2); and
a footboard (53a) positioned between the front wheel (5) and the seat (6) in a vehicle longitudinal direction, the footboard (53a) positioned lower than the seat (6), the footboard (53a) positioned higher than the right under frame portion (24a) and the left under frame portion (24b);
wherein the head pipe portion (21) is positioned in a vehicle body center in a vehicle transverse direction; and
the left reinforcement frame portion (23b) is bent rearwards; and the right reinforcement frame portion (23a) is bent rearwards;
**characterized in that**
the left down frame portion (22b) is connected to a left lateral portion of the head pipe portion (21); and the right down frame portion (22a) is connected to a right lateral portion of the head pipe portion (21);
the left reinforcement frame portion (23b) has a stiffness higher than a stiffness of the left down frame portion (22b), and the right reinforcement frame portion (23a) has a stiffness higher than a stiffness of the right down frame portion (22a).

2. The motorcycle (1) according to claim 1, wherein the vehicle body frame (2) does not include a frame extended from the head pipe portion (21) to a position lower than the footboard (53a) while being disposed between the right down frame portion (22a) and the left down frame portion (22b) in the vehicle transverse direction.

3. The motorcycle (1) according to claim 1 or 2, wherein each of the right reinforcement frame portion (23a) and the left reinforcement frame portion (23b) includes a pipe-shaped member (37) and a plate-shaped member (38), the plate-shaped member (38) disposed for intersecting with the pipe-shaped member (37) across a diameter of the pipe-shaped member (37).

4. The motorcycle (1) according to any one of claims 1 to 3, wherein the plate-shaped member (38) has a smaller area in a plan view of the vehicle than in a side view of the vehicle.

5. The motorcycle (1) according to any one of claims 1 to 4,
wherein an upper portion of the left down frame portion (22b) and an upper portion of the left reinforcement frame portion (23b) are at least partially overlapped in the vehicle longitudinal direction in a side view of the vehicle, and
an upper portion of the right down frame portion (22a) and an upper portion of the right reinforcement frame portion (23a) are at least partially overlapped in the vehicle longitudinal direction in a side view of the vehicle.

6. The motorcycle (1) according to any one of claims 1 to 5, further comprising:
a battery (43) disposed between the right down frame portion (22a) and the left down frame portion (22b) in the vehicle transverse direction.

7. The motorcycle (1) according to claims 6, wherein the right down frame portion (22a) and the left down frame portion (22b) are at least partially overlapped with the battery (43) in a side view of the vehicle.

8. The motorcycle (1) according to any one of claims 1 to 7, wherein each of the right down frame portion (22a) and the left down frame portion (22b) includes a portion horizontally extended laterally outwards from the head pipe portion (21).

9. The motorcycle (1) according to any one of claims 1 to 8, wherein a front edge (530) of the footboard (53a) is forwardly recessed in a middle portion thereof in the vehicle transverse direction.

10. The motorcycle (1) according to any one of claims 1 to 8, wherein the footboard (53a) has a front edge (530) linearly extended in the transverse direction.

11. The motorcycle (1) according to any one of claims 1 to 9, wherein a center of a front edge (530) of the footboard (53a) in the vehicle transverse direction is overlapped with the right reinforcement frame portion (23a) and the left reinforcement frame portion (23b) in a side view of the vehicle.

12. The motorcycle (1) according to any one of claims 1 to 11,
wherein the front fork (4) includes a suspension device (11) supporting the front wheel (5), and
the front wheel (5) is configured to be overlapped with the right down frame portion (22a) and the left down frame portion (22b) in a side view of the vehicle at least when the suspension device (11) is maximally contracted.

13. The motorcycle (1) according to any one of claims 1 to 12, wherein the footboard (53a) is flat.

## Patentansprüche

1. Motorrad (1), das umfasst:
einen Fahrzeugkarosserie-Rahmen (2), der einen Steuerrohrabschnitt (21); einen linken Unterrahmenabschnitt (22b), der sich von dem Steuerrohrabschnitt (21) links seitlich weg nach unten erstreckt; einen rechten Unterrahmenabschnitt (22a), der sich von dem Steuerkopfabschnitt (21) rechts seitlich weg nach unten erstreckt; einen linken Verstärkungsrahmenabschnitt (23b), der mit dem linken Unterrahmenabschnitt (22b) verbunden ist; einen rechten Verstärkungsrahmenabschnitt (23a), der mit dem rechten Unterrahmenabschnitt (22a) verbunden ist; und einen linken unteren Rahmenabschnitt (24b) enthält,
der mit dem linken Verstärkungsrahmenabschnitt (23b) verbunden ist, wobei sich der linke untere Rahmenabschnitt (24b) nach hinten erstreckt; sowie einen rechten unteren Rahmenabschnitt (24a), der mit dem rechten Verstärkungsrahmenabschnitt (23a) verbunden ist, wobei sich der rechte untere Rahmenabschnitt (24a) nach hinten erstreckt;
eine Lenkwelle (3), die in den Steuerkopfabschnitt (21) eingeführt ist;
eine Vorderradgabel (4), die mit einem unteren Abschnitt der Lenkwelle (3) verbunden ist;
ein Vorderrad (5), das von einem unteren Abschnitt der Vorderradgabel (4) getragen wird;
einen Sitz (6), der hinter dem Steuerkopfabschnitt (21) positioniert ist, wobei der Sitz (6) von dem Fahrzeugkarosserie-Rahmen (2) getragen wird; und
ein Trittbrett (53a), das zwischen dem Vorderrad (5) und dem Sitz (6) in einer Längsrichtung des Fahrzeugs positioniert ist, wobei das Trittbrett (53a) niedriger positioniert ist als der Sitz (6) und das Trittbrett (53a) höher positioniert ist als der rechte untere Rahmenabschnitt (24a) und der linke untere Rahmenabschnitt (24b);
wobei der Steuerrohrabschnitt (21) in einer Querrichtung des Fahrzeugs in der Mitte der Fahrzeugkarosserie positioniert ist; und
der linke Verstärkungsrahmenabschnitt (23b) nach hinten gebogen ist und der rechte Verstärkungsrahmenabschnitt (23a) nach hinten gebogen ist;
**dadurch gekennzeichnet, dass**
der linke Unterrahmenabschnitt (22b) mit einem linken seitlichen Abschnitt des Steuerrohrabschnitts (21) verbunden ist und der rechte Unterrahmenabschnitt (22a) mit einem rechten seitlichen Abschnitt des Steuerrohrabschnitts (21) verbunden ist;
der linke Verstärkungsrahmenabschnitt (23b) eine Steifigkeit hat, die größer ist als eine Steifigkeit des linken Unterrahmenabschnitts (22b), und der rechte Verstärkungsrahmenabschnitt (23a) eine Steifigkeit hat, die größer ist als eine Steifigkeit des rechten Unterrahmenabschnitts (22a).

2. Motorrad (1) nach Anspruch 1, wobei der Fahrzeugkarosserie-Rahmen (2) keinen Rahmen einschließt, der sich von dem Steuerrohrabschnitt (21) zu einer Position erstreckt, die tiefer liegt als das Trittbrett (53a), und dabei in der Querrichtung des Fahrzeugs zwischen dem rechten Unterrahmenabschnitt (22a) und dem linken Unterrahmenabschnitt (22b) angeordnet ist.

3. Motorrad (1) nach Anspruch 1 oder 2, wobei der rechte Verstärkungsrahmenabschnitt (23a) und der linke Verstärkungsrahmenabschnitt (23b) jeweils ein rohrförmiges Element (37) sowie ein plattenförmiges Element (38) enthalten und das plattenförmige Element (38) so angeordnet ist, dass es das rohrförmige Element (37) über einen Durchmesser des rohrförmigen Elementes (37) schneidet.

4. Motorrad (1) nach einem der Ansprüche 1 bis 3, wobei das plattenförmige Element (38) in Draufsicht auf das Fahrzeug eine kleinere Fläche hat als in einer Seitenansicht des Fahrzeugs.

5. Motorrad (1) nach einem der Ansprüche 1 bis 4,
wobei ein oberer Abschnitt des linken Unterrahmenabschnitts (22b) und ein oberer Abschnitt des linken Verstärkungsrahmenabschnitts (23b) in einer Seitenansicht des Fahrzeugs einander in der Längsrichtung des Fahrzeugs wenigstens teilweise überlappen, und ein oberer Abschnitt des rechten Unterrahmenabschnitts (22a) und ein oberer Abschnitt des rechten Verstärkungsrahmenabschnitts (23a) in einer Seitenansicht des Fahrzeugs einander in der Längsrichtung des Fahrzeugs wenigstens teilweise überlappen.

6. Motorrad (1) nach einem der Ansprüche 1 bis 5, das des Weiteren umfasst:
eine Batterie (43), die in der Querrichtung des Fahrzeugs zwischen dem rechten Unterrahmenabschnitt (22a) und dem linken Unterrahmenabschnitt (22b) angeordnet ist.

7. Motorrad (1) nach Anspruch 6, wobei sich der rechte Unterrahmenabschnitt (22a) und der linke Unterrahmenabschnitt (22b) in einer Seitenansicht des Fahrzeugs wenigstens teilweise mit der Batterie (43) überlappen.

8. Motorrad (1) nach einem der Ansprüche 1 bis 7, wobei der rechte Unterrahmenabschnitt (22a) und der linke Unterrahmenabschnitt (22b) jeweils einen Abschnitt enthalten, der sich von dem Steuerrohrabschnitt (21) horizontal seitlich nach außen erstreckt.

9. Motorrad (1) nach einem der Ansprüche 1 bis 8, wobei eine Vorderkante (530) des Trittbretts (53a) in einem Mittelabschnitt desselben in der Querrichtung des Fahrzeugs nach vorn zurückgesetzt ist.

10. Motorrad (1) nach einem der Ansprüche 1 bis 8, wobei das Trittbrett (53a) eine Vorderkante (530) hat, die in der Querrichtung linear verläuft.

11. Motorrad (1) nach einem der Ansprüche 1 bis 9, wobei sich eine Mitte einer Vorderkante (530) des Trittbretts (53a) in einer Seitenansicht des Fahrzeugs in der Querrichtung des Fahrzeugs mit dem rechten Verstärkungsrahmenabschnitt (23a) und dem linken Verstärkungsrahmenabschnitt (23b) überlappt.

12. Motorrad (1) nach einem der Ansprüche 1 bis 11,
wobei die Vorderradgabel (4) eine Aufhängungseinrichtung (11) enthält, die das Vorderrad (5) trägt, und
das Vorderrad (5) so eingerichtet ist, dass es sich in einer Seitenansicht des Fahrzeugs zumindest dann mit dem rechten Unterrahmenabschnitt (22a) und dem linken Unterrahmenabschnitt (22b) überlappt, wenn die Aufhängungsvorrichtung (11) maximal eingefahren ist.

13. Motorrad (1) nach einem der Ansprüche 1 bis 12, wobei das Trittbrett (53a) flach ist.

## Revendications

1. Motocyclette (1) comprenant :
une ossature de cadre (2) incluant : une partie formant tubulure de tête (21), une partie de cadre bas gauche (22b) qui s'étend vers le bas latéralement en s'éloignant vers la gauche de la partie formant tubulure de tête (21), une partie de cadre bas droit (22a) qui s'étend vers le bas latéralement en s'éloignant vers la droite de la partie formant tubulure de tête (21), une partie de cadre de renforcement gauche (23b) raccordée à la partie de cadre bas gauche (22b), une partie de cadre de renforcement droit (23a) raccordée à la partie de cadre bas droit (22a), une partie de cadre inférieur gauche (24b) raccordée à la partie de cadre de renforcement gauche (23b), la partie de cadre inférieur gauche (24b) étant étendue vers l'arrière, et une partie de cadre inférieur droit (24a) raccordée à la partie de cadre de renforcement droit (23a), la partie de cadre inférieur droit (24a) étant étendue vers l'arrière,
un axe de direction (3) inséré dans la partie formant tubulure de tête (21),
une fourche avant (4) raccordée à une partie inférieure de l'axe de direction (3),
une roue avant (5) supportée par une partie inférieure de la fourche avant (4),
un siège (6) positionné à l'arrière de la partie formant tubulure de tête (21), le siège (6) étant supporté par l'ossature de cadre du véhicule (2), et
un marchepied (53a) positionné entre la roue avant (5) et le siège (6) dans la direction longitudinale du véhicule, le marchepied (53a) étant positionné plus bas que le siège (6), le marchepied (53a) étant positionné plus haut que la partie de cadre inférieur droit (24a) et que la partie de cadre inférieur gauche (24b),
dans laquelle la partie formant tubulure de tête (21) est positionnée au centre du cadre du véhicule dans la direction transversale du véhicule, et
la partie de cadre de renforcement gauche (23b) est cintrée vers l'arrière et la partie de cadre de renforcement droit (23a) est cintrée vers l'arrière,
**caractérisée en ce que**
la partie de cadre bas gauche (22b) est raccordée à une partie latérale gauche de la partie formant tubulure de tête (21) et la partie de cadre bas droit (22a) est raccordée à une partie latérale droite de la partie formant tubulure de tête (21),
la partie de cadre de renforcement gauche (23b) présente une rigidité supérieure à la rigidité de la partie de cadre bas gauche (22b) et la partie de cadre de renforcement droit (23a) présente une rigidité supérieure à la rigidité de la partie de cadre bas droit (22a).

2. Motocyclette (1) selon la revendication 1, dans laquelle l'ossature de cadre (2) n'inclut pas de cadre qui s'étende depuis la partie formant tubulure de tête (21) vers une position inférieure au marchepied (53a) tout en étant disposé entre la partie de cadre bas droit (22a) et la partie de cadre bas gauche (22b) dans la direction transversale du véhicule.

3. Motocyclette (1) selon la revendication 1 ou 2, dans laquelle chacune de la partie de cadre de renforcement droit (23a) et de la partie de cadre de renforcement gauche (23b) inclut un élément en forme de tube (37) et un élément en forme de plaque (38), l'élément en forme de plaque (38) étant disposé pour se croiser avec l'élément en forme de tube (37) de part et l'autre du diamètre de l'élément en forme de tube (37).

4. Motocyclette selon l'une quelconque des revendications 1 à 3, dans laquelle l'élément en forme de plaque (38) présente en vue de plan du véhicule une surface plus petite qu'en vue latérale du véhicule.

5. Motocyclette selon l'une quelconque des revendications 1 à 4,
dans laquelle la partie supérieure du cadre bas gauche (22b) et la partie supérieure du cadre de renforcement gauche (23b) se chevauchent au moins partiellement dans la direction longitudinale du véhicule selon une vue latérale du véhicule, et
la partie supérieure du cadre bas droit (22a) et la partie supérieure du cadre de renforcement droit (23a) se chevauchent au moins partiellement dans la direction longitudinale du véhicule selon une vue latérale du véhicule.

6. Motocyclette selon l'une quelconque des revendications 1 à 5, comprenant en outre :
une batterie (43) placée entre la partie de cadre bas droit (22a) et la partie de cadre bas gauche (22b) dans la direction transversale du véhicule.

7. Motocyclette selon la revendication 6, dans laquelle la partie de cadre bas droit (22a) et la partie de cadre bas gauche (22b) se chevauchent au moins partiellement avec la batterie (43) selon une vue latérale du véhicule.

8. Motocyclette selon l'une quelconque des revendications 1 à 7, dans laquelle chacune de la partie de cadre bas droit (22a) et de la partie de cadre bas gauche (22b) inclut une partie qui s'étend horizontalement et latéralement vers l'extérieur depuis la partie formant tubulure de tête (21).

9. Motocyclette selon l'une quelconque des revendications 1 à 8, dans laquelle le bord avant (530) du marchepied (53a) se retire vers l'avant au milieu de celui-ci dans la direction transversale du véhicule.

10. Motocyclette selon l'une quelconque des revendications 1 à 8, dans laquelle le marchepied (53a) possède un bord avant (530) qui s'étend linéairement dans la direction transversale.

11. Motocyclette selon l'une quelconque des revendications 1 à 9, dans laquelle le centre du bord avant (530) du marchepied (53a) dans la direction transversale du véhicule se chevauche avec la partie de cadre de renforcement droit (23a) et la partie de cadre de renforcement gauche (23b) selon une vue latérale du véhicule.

12. Motocyclette selon l'une quelconque des revendications 1 à 11,
dans laquelle la fourche avant (4) inclut un dispositif de suspension (11) supportant la roue avant (5), et
la roue avant (5) est configurée pour se chevaucher avec la partie de cadre bas droit (22a) et la partie de cadre bas gauche (22b) selon une vue latérale du véhicule, au moins lorsque le dispositif de suspension (11) est contracté au maximum.

13. Motocyclette selon l'une quelconque des revendications 1 à 12, dans laquelle le marchepied (53a) est plat.
